# EUROPEAN PATENT APPLICATION

(11) **EP 4 672 541 A1**
(43) Date of publication of application: **31.12.2025**
(21) Application number: 24183910.9
(22) Date of filing: 24.06.2024
(51) Int. Cl.: H02J 7/00

(54) **A SYSTEM AND A METHOD FOR DATA TRANSFER BETWEEN ONE OR MORE BATTERIES, ONE OR MORE CHARGERS FOR THE BATTERIES, AND A CLOUD, AND A WIRELESS MESH NETWORK**

(71) Applicant: Hilti Aktiengesellschaft, 9494 Schaan (LI)
(72) Inventor: Lang, Moritz, 86399 Bobingen (DE); Malik, Muhammad Salman, 86159 Augsburg (DE); Rosenschild, Klaus, 86609 Donauwörth (DE); Lupper, Alfred, 86482 Aystetten (DE)
(74) Representative: Hilti Aktiengesellschaft Corporate Intellectual Property

(57) **Abstract**

A system for data transfer between one or more batteries, one or more chargers for the batteries, and a cloud comprising: a first battery of the one or more batteries and a first charger of the one or more chargers, configured to be connected to each other in a wireless mesh network; at least a second battery of the one or more batteries and/or at least a second charger of the one or more chargers, configured to be connected to the wireless mesh network; a first gateway configured to connect the wireless mesh network to the cloud.

## Description

### FIELD OF INVENTION

The present invention relates to a system and a method for data transfer between one or more batteries, one or more chargers for the batteries, and a cloud, it further relates to a wireless mesh network with batteries and chargers as nodes. The present invention is particularly useful for batteries and chargers for cordless power tools and for an asset management system for cordless power tools, batteries, and chargers.

### BACKGROUND OF THE INVENTION

Asset management systems which collect data from power tools, batteries, and chargers are known. In such systems data can be uploaded to a cloud for further processing, e.g., the Hilti NURON platform is such a system, as described in Hilti Deutschland, Osterreich, Schweiz. "Die cloudbasierten Datenservices der Hilti Nuron Akkugeräte-Plattform". YouTube online video. Upload September 13, 2022, retrieved on 2024.05.02. Retrieved from <https://youtu.be/btuQ6mawaKE>. In the described system a wired and chained approach to collect and forward the data into the cloud is described. Every tool is equipped with a pluggable battery. The batteries can be used with different tools. The batteries are capable to store data generated by power tools before, during, and after usage. During the battery charging process, the data is uploaded to the cloud via a charger. The charger may be equipped with a cordless data module that reads out battery data and data collected from tools and chargers connected to the battery. Before and/or after the charging procedure, the cordless data module establishes a wireless connection to the cloud and uploads battery, charger, power tool and its own data. Alternatively, the functionality of the cordless data module may be built-in into the charger. The battery needs to be plugged to the charger to forward the data into the cloud. The time difference between the generation of the data by the tool or battery and the uploading of the data to the cloud may be long. The charger uploads the data only if cellular connectivity is present and the charger is able to connect directly to the cloud.

WO2023039142A1 describes a power tool, a wireless communication device, and method for jobsite inventory checks. The power tool includes a body, an actuator, an antenna, and an electronic controller in communication with the antenna. The electronic controller includes a processor. The processor is configured to receive a mesh mode message, requesting the power tool to enable a mesh communication mode; to receive an inventory check message, originating from a wireless communication device; to retransmit the inventory check message to at least one additional power tool in a mesh network with the power tool; to receive an additional tool identifier from each of the at least one additional power tools in the mesh network; and to transmit, in response to the inventory check message, a tool identifier for the power tool and each of the additional tool identifiers.

It is one object of the invention to provide an improved system to transfer data transfer between one or more batteries and one or more chargers for the batteries, and, if applicable, a cloud.

### DISCLOSURE OF THE INVENTION

A system for data transfer between one or more batteries, one or more chargers for the batteries, and a cloud is proposed, the system comprising: a first battery of the one or more batteries and a first charger of the one or more chargers, configured to be connected to each other in a wireless mesh network; at least a second battery of the one or more batteries and/or at least a second charger of the one or more chargers, configured to be connected to the wireless mesh network; a first gateway configured to connect the wireless mesh network to the cloud.

Conventional systems for data transfer between batteries, chargers and a cloud may be implemented in a hierarchical manner, i.e., data is transferred from a battery to a charger, to a backend or to the cloud, and vice versa. A wireless mesh network for batteries and chargers provides an improved, more flexible system for the data transfer. The wireless mesh network enables a first battery to transfer data to a first charger which is not directly connected to a gateway, however, which is connected to a second charger, and the second charger is connected via a gateway to the cloud, and vice versa. Also, a transfer from the first battery via a second battery to the second charger and to the cloud may be possible, depending on the devices available in the wireless mesh network. Different routes for transfer of data within the wireless mesh network may be possible. It is not necessary, that every battery or charger is connected directly to all other batteries or chargers.

Particularly, a wireless mesh network is a local area network topology in which the infrastructure nodes, i.e., in this case, e.g., the batteries and the chargers may connect directly, dynamically, and non-hierarchically to other nodes and cooperate with one another to efficiently route data, e.g., to the cloud. The lack of dependency on one node allows for several nodes to participate in the relay of information. Such wireless mesh networks can dynamically self-organize and self-configure, which can reduce installation overhead. The ability to self-configure enables dynamic distribution of workloads, particularly in the event a few nodes should fail. This in turn may contribute to fault-tolerance and reduced maintenance costs.

The batteries and the chargers may be configured to be connected via a wireless mesh network by having wireless communication capabilities, e.g., wireless senders and receivers, data storages and processors, and having the necessary software or firmware for connecting to a wireless mesh network. The chargers may have the communication capabilities integrated in the charger or as additional cordless data module, which may be attached to the chargers.

The batteries and the chargers may be moved around by workers on a jobsite. A wireless mesh network may automatically reconfigure or reestablish with little or no manual effort. A wireless mesh network, e.g., on a large jobsite, may be segregated into sub wireless mesh networks for improved performance, e.g., lower latency to send data to the cloud, and/or lower memory requirements on batteries and chargers. A gateway or a group of gateways with connectivity to a cloud may create a wireless mesh network that batteries or chargers may join. Such a mesh network may be set up as a sub wireless mesh network and may also introduce limits on the number of batteries or chargers that can join it. If a gateway loses connectivity to the cloud or it is powered off, batteries or chargers may join another network.

In an embodiment, the first and/or the second charger is configured to act as the first and/or a second gateway and is configured to connect the wireless mesh network to the cloud via a wired or wireless connection.

It is convenient to provide the gateway function in one or more chargers, e.g., directly in the charger an/or in a cordless data module of the charger. Having the gateway function provided by the chargers avoids additional devices, e.g., on a construction site. The chargers configured to act as gateway may be connected via an ethernet cable to a telecommunication network. The chargers may also have cellular connectivity and may thus be able to connect to a cellular communication network. Data may be transferred to and from the cloud to the chargers via the cellular or the telecommunication network. If there are two or more chargers configured to act as gateway in the wireless mesh network, redundancy may be provided for the data transfer between the batteries and chargers in the wireless mesh network and the cloud.

A local server may also act as gateway and/or gateways may be configured to connect the wireless mesh network to the cloud via the local server.

In a further embodiment, the first and/or the second battery is further configured to communicate data, via a wireless or wired connection, with the first and/or the second charger, when the first and/or the second battery is plugged to the first and/or the second charger for being charged.

Batteries may communicate with a charger via the wireless mesh network. There may be also a possibility for a further, e.g., direct communication between a battery, which is plugged to a charger, and the charger. The communication may be a wired communication, e.g., via a physical connection of the battery and the charger. The communication may be also a wireless communication, e.g., using the same communication capabilities as for the wireless mesh network, alternatively, other wireless communication capabilities of batteries and chargers may be used. Communication capabilities of a charger include a cordless communication module, which may be attached to the charger. Having additional communication capabilities enables to also communicate data from batteries, which are not configured to communicate into the wireless mesh network, into the wireless mesh network, by plugging such a battery to a charger of the network and transferring data from the battery via the charger into the network. The communication between batteries and chargers may be bidirectional, i.e., the batteries may send data to chargers and chargers may send data to batteries.

In a further embodiment, the first and/or second battery is configured to store in a battery data storage, data received from the first and/or the second charger, and/or the first and/or second battery is configured to transfer to the first and/or the second charger, data stored in the battery data storage.

Batteries may act as data shuttles, receiving data, storing data, and transferring data, e.g., a battery may receive data from a charger and store the data. The battery may also transfer stored data to the charger. In a similar way, a battery may also store data received via a wireless mesh network and transfer stored data to the wireless mesh network.

In a further embodiment, the system for data transfer is further comprising a cordless power tool configured to communicate data, via a wired or a wireless connection, with the first and/or the second battery when the first and/or the second battery is plugged to the cordless power tool for supplying power.

A cordless power tool which is not configured to communicate via a wireless mesh network may use a battery as a data shuttle and transfer data, e.g., usage statistics, location information, and/or data on wear, to the battery. The battery may store the data and transfer it to a charger and/or into the wireless mesh network. The communication between the cordless power tool and the battery may use a wired connection, e.g., a physical serial connection, or a wireless connection, e.g., near field communication.

The cordless power tool may be, e.g., a saw, a driver, a wrench, a rotary hammer, a drill, or a screwdriver. Such cordless power tools are often supplied with power by exchangeable battery packs, frequently just called batteries. The batteries are charged from time to time at chargers.

In a further embodiment, the first and/or second battery is configured to store in the battery data storage, data received from the cordless power tool, and/or the first and/or second battery is configured to transfer to the power tool, data stored in the battery data storage.

By storing data received from a cordless power tool or transferring data from its data storage to the cordless power tool, a battery can be used as data shuttle between a wireless mesh network and/or a charger and the cordless power tool.

In a further embodiment, the system for data transfer is used for transferring data via the cloud to and/or from an asset management system for managing power tools, batteries, and chargers.

Further, a wireless mesh network is proposed, the wireless mesh network comprising as nodes: a first battery; a first charger for charging the first and/or a second battery; at least the second battery and/or at least a second charger for charging the first and/or the second battery.

Building a wireless mesh network with batteries and chargers as nodes allows various routings for data between the batteries and chargers. Larger distances may be bridged with batteries and/or chargers in between two devices, such as batteries and/or chargers, for communication. A wireless mesh network can be easily established between batteries and chargers and new batteries and/or chargers can easily be integrated in the wireless mesh network automatically or with only a minor administration effort. Batteries and/or chargers may be only allowed to connect into a predefined wireless mesh network, e.g., based on their identification number, a code and/or a key pairing. The wireless mesh network may be a partially or a fully connected mesh network.

In a further embodiment, a first gateway is connecting the wireless mesh network with a cloud, particularly, wherein the first and/or the second charger is connecting the wireless mesh network as the first and/or as a second gateway to the cloud.

A wireless mesh network can be connected to a cloud for transferring data from the nodes of the wireless mesh network to the cloud via a gateway. The gateway may be implemented by a charger. Several gateways may be present.

In a further embodiment, the first and/or second battery is configured to communicate data, via a wired or a wireless connection, with one or more cordless power tools, when the first and/or the second battery is plugged to the one or more cordless power tools for supplying power.

Data from a cordless power tool may be transferred into the wireless mesh network by a battery as data shuttle between the cordless power tool and the wireless mesh network and vice versa data may be transferred from the wireless mesh network to the power tool. Via the gateway, e.g., a charger, data from the cloud, e.g., a software update, may be transferred to a battery in the wireless mesh network and from the battery to the power tool.

In a further embodiment, the wireless mesh network uses Bluetooth Mesh, Zigbee, Z-Wave, Matter, and/or Wirepas as communication standard.

There is a multitude of standards and protocols which may be used for building a wireless mesh network, the wireless mesh network not being restricted to any of these.

Further a method to transfer data between one or more batteries, one or more chargers for the batteries, and a cloud is proposed, the method is comprising the steps of: building a wireless mesh network with a first battery of the one or more batteries, a first charger of the one or more chargers, and at least a second battery of the one or more batteries and/or at least a second charger of the one or more chargers as nodes; connecting the wireless mesh network via a first gateway to the cloud; communicating data between the first battery, the second battery, the first charger and/or the second charger and the cloud via the wireless mesh network over the gateway.

By building a wireless mesh network with batteries and chargers as nodes, the communication between the batteries and chargers is flexible, can often cover a larger area as compared to a star shaped structure with similar transmission power, and can be realized with a minimum of administrative effort and even allow the adding and removal of batteries and chargers from the mesh network without affecting the functionality. A connection of the wireless mesh network to a cloud via a gateway enables communication to the outside of the wireless mesh network.

In an embodiment, the first and/or second charger is operating as a gateway and is transferring data between the mesh network and the cloud via a wired or a wireless connection.

Chargers connected into the wireless mesh network may be used as one or more gateways to other networks, e.g., to cellular or telecommunication networks. Using chargers as gateways facilitates the exchange of data between the wireless mesh network and other networks. Chargers may have integrated communication capabilities, both for the wireless mesh network and/or for the other networks, and/or may have an additional cordless data module, which may be attached to the chargers.

In a further embodiment, the method to transfer data between one or more batteries, one or more chargers for the batteries, and a cloud is further comprising the steps: plugging the first and/or second battery, to the cordless power tool for supplying power; receiving data from a cordless power tool by the first and/or second battery, when the first and/or second battery is plugged to the cordless power tool; storing the data received from the power tool in a data storage of the first and/or second battery; transferring the data, received from the power tool, from the data storage to the first and/or the second charger via the wireless mesh network and/or via a wireless or wired connection established when the first and/or the second battery is plugged to the first and/or the second charger.

Batteries may be used as data shuttles to transfer data, e.g., from cordless power tools to the wireless mesh network and via a charger and/or the wireless mesh network to a cloud. The data may comprise usage data, identification data, data on wear and/or location of the cordless power tool.

In a further embodiment, the method to transfer data between one or more batteries, one or more chargers for the batteries, and a cloud is further comprising the steps: receiving data from the cloud by the first and/or second battery, via the wireless mesh network and/or via the wireless or wired connection established when the first and/or the second battery is plugged to the first and/or the second charger; storing the data received from the cloud in a data storage of the first and/or second battery; transferring the data, received from the cloud, from the data storage to the cordless power tool via a wireless or wired connection established when the first and/or the second battery is plugged to the cordless power tool.

Batteries may also be used as data shuttles to transfer data, e.g., from a cloud via a wireless mesh network and/or via a charger to a cordless power tool. The data may comprise software or firmware updates, settings, and/or use restrictions for the cordless power tool.

The various embodiments and features of the system for data transfer, the wireless mesh network and/or the method to transfer data between one or more batteries, one or more chargers for the batteries, and a cloud may be combined with each other.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

### BRIEF DESCRIPTION OF THE DRAWINGS

Further embodiments, features and advantages of the present invention will become apparent from the subsequent description and dependent claims, taken in conjunction with the accompanying drawings, in which:
- Fig. 1: shows a data transfer from batteries and chargers which are connected to each other by a wireless mesh network to a cloud;
- Fig. 2: shows a data transfer from a cloud to chargers and batteries connected by a wireless mesh network;
- Fig. 3: shows an improved internet connectivity by a wireless mesh network;
- Fig. 4: shows a management of inventory on a jobsite with a wireless mesh network;
- Fig. 5: shows the management of inventory on a jobsite from Fig. 4 in particular relation to an unused and unplugged battery;
- Fig. 6: shows a distribution of time and time zone via a wireless mesh network;
- Fig. 7: shows a distribution of location information via a wireless mesh network;
- Fig. 8: shows an alternative schematic view of a system for data transfer between one or more batteries, one or more chargers for the batteries, and a cloud emphasizing the way of connection; and
- Fig. 9: shows in a flowchart a data transfer from a cordless power tool to a battery; via the battery to a first charger; and via a second charger as a gateway to a cloud.

In the Figures, like reference numerals designate like or functionally equivalent elements, unless otherwise indicated.

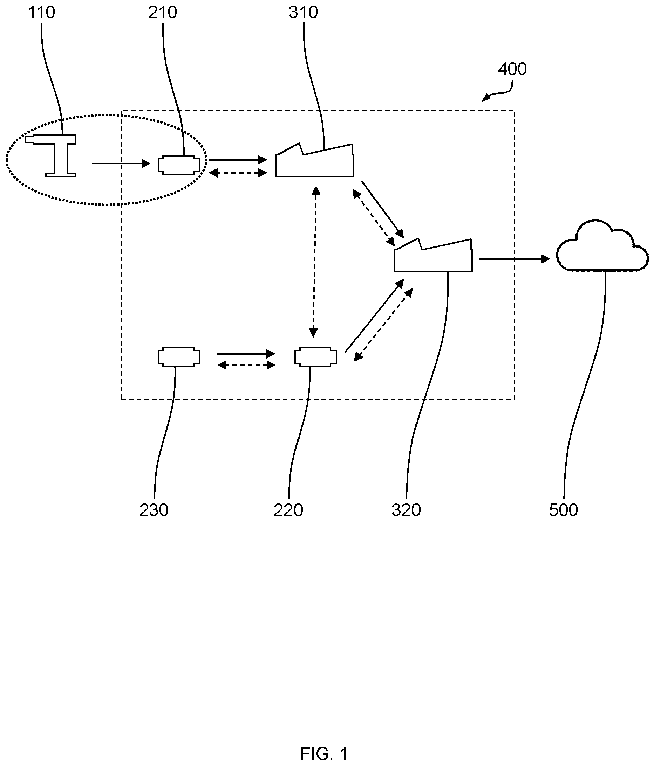

In the Figs. 1 to 8, short-dashed arrows indicate wireless mesh network connections, and short-dashed localizations indicate a wireless mesh network. Dotted arrows indicate a wired connection, and dotted localizations indicate a physical connection of devices. Solid arrows indicate the direction of data transfer in a use case according to the Figure. Long dashed arrows indicate a cellular connection.

### DETAILED DESCRIPTION OF ILLUSTRATIVE EMBODIMENTS

Fig. 1 to Fig. 8 show and explain various use cases of a wireless mesh network 400 and a system for data transfer between one or more batteries 210, 220, 230, one or more chargers 310, 320 for the batteries 210, 220, 230, and a cloud 500. Common features shown in Figs. 1 to 8 are explained for all Figs. 1 to 8 together, before the detailed use cases are explained.

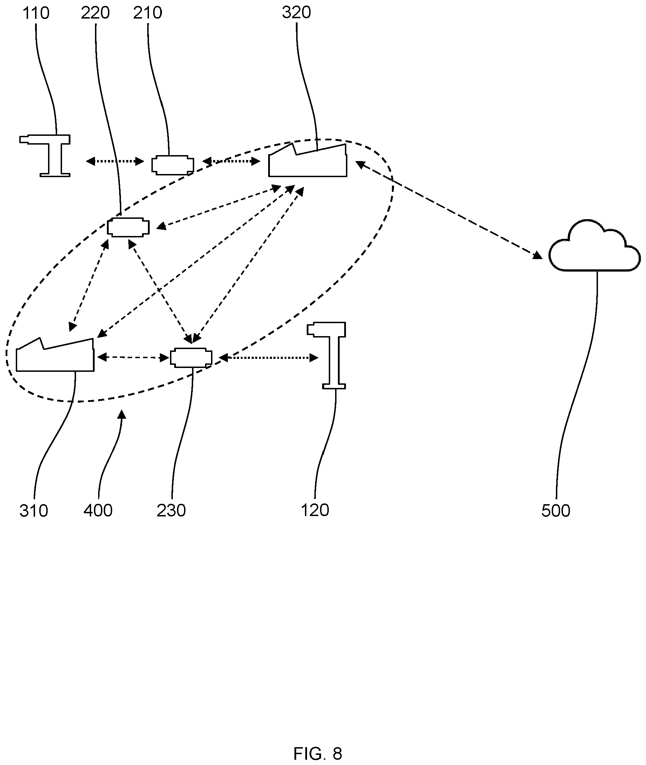

The Figs. 1 to 7 depict a first cordless power tool 110 and in Fig. 8 also a second cordless power tool 120. The cordless power tools 110, 120 comprise a micro controller to process usage and control data and a power tool data storage to store power tool data, such as a power tool identifier, software packages, e.g., for updates, and generated power tool data., e.g., on usage of the cordless power tools 110, 120. The power tool data can be transferred to the batteries 210, 220, 230 via a physical serial connection, when the batteries 210, 220, 230 are plugged to the cordless power tools 110, 120. Alternatively, also a wireless connection, e.g., a near field communication, is possible to transfer the power tool data from the cordless power tools 110, 120 to the batteries 210, 220, 230 or transfer data from the batteries 210, 220, 230 to the cordless power tools 110, 120. In the Figs. 1 to 8, the cordless power tools 110, 120 are shown as cordless drills, other cordless power tools are also possible, e.g., a saw, a driver, a wrench, a rotary hammer, or a screwdriver.

When plugged to the cordless power tools 110, 120, the batteries 210, 220, 230 supply electrical power to the cordless power tools 110, 120 and have a wired data connection to the cordless power tools 110, 120 to communicate data, e.g., control and usage data. The batteries 210, 220, 230 comprise a micro controller to process data, such as usage and control data, and a battery data storage to store e.g., power tool data, software packages, and generated battery data. The batteries 210, 220, 230 have wireless communication capabilities, e.g., a wireless communication module, that allows the batteries 210, 220, 230 to send and receive data from other devices, in particular other batteries 210, 220, 230 and/or chargers 310, 320, e.g., on a construction site, a jobsite, or a warehouse. The batteries 210, 220, 230 may also send and receive directly or indirectly data to and/or from the cloud via cellular or satellite communication.

A second charger 320 is connected via a wireless connection, e.g., by cellular connectivity, to the cloud 500, which supports an asset management system, e.g., a device management platform. The chargers 310, 320 can communicate with the batteries 210, 220, 230, e.g., transfer power tool and battery data from the batteries 210, 220, 230, store the power tool and battery data, e.g., also for several cordless power tools, such as the cordless power tools 110, 120 and for several batteries, such as the batteries 210, 220, 230, on its charger data storage, and transfer the power tool and battery data, particularly asynchronously, to the cloud 500 and thus provide the battery and power tool data to the device management platform, which may be in a backend. The chargers 310, 320 can also receive configuration data and update packages from the cloud 500 and the device management platform, store the configuration data and update packages on its charger data storage, until the received configuration data and update packages can be written to the batteries 210, 220, 230. Chargers 310, 320 may also be chargers 310, 320 with more than one bay for batteries 210, 220, 230. The data from these batteries 210, 220, 230 may be stored in the charger data storage and later sent to the cloud. A first charger 310 may be connected to the second charger 320 by a wireless connection.

The cloud 500 receives and stores power tool and battery data from the second charger 320. The cloud 500 can also send power tool and battery configuration data and update packages to the second charger 320.

Fig. 1 shows a data transfer from batteries 210, 220, 230 which are connected, directly or indirectly, to each other by a wireless mesh network 400 to a cloud 500. A first battery 210 is plugged to a first cordless power tool 110. The first battery 210 communicates with the first cordless power tool 110 and power tool data is transferred to the first battery 210, e.g., using a wired connection, e.g., a physical serial connection.

The first battery 210 may communicate, while plugged to the first power tool 110, with the first charger 310 over the wireless mesh network 400 and transfer the power tool data. The first battery 210 may also transfer the power tool data to the first charger 310 when unplugged from the first cordless power tool 110 and plugged to the first charger 310, e.g., using a wired or wireless connection.

The first charger 310 is not connected directly to the cloud 500 and in a conventional system the data could not be transferred further. In the example of Fig. 1, the first charger 310 is connected via a wireless mesh network 400 to a second charger 320, which is connected to the cloud 500, e.g., using cellular connectivity. Therefore, the first charger 310 can transfer the power tool data from the first cordless power tool 110 to the second charger 320. The second charger 320 transfers the power tool data to the cloud 500, acting as a gateway and connecting the wireless mesh network via a cellular network to the cloud 500.

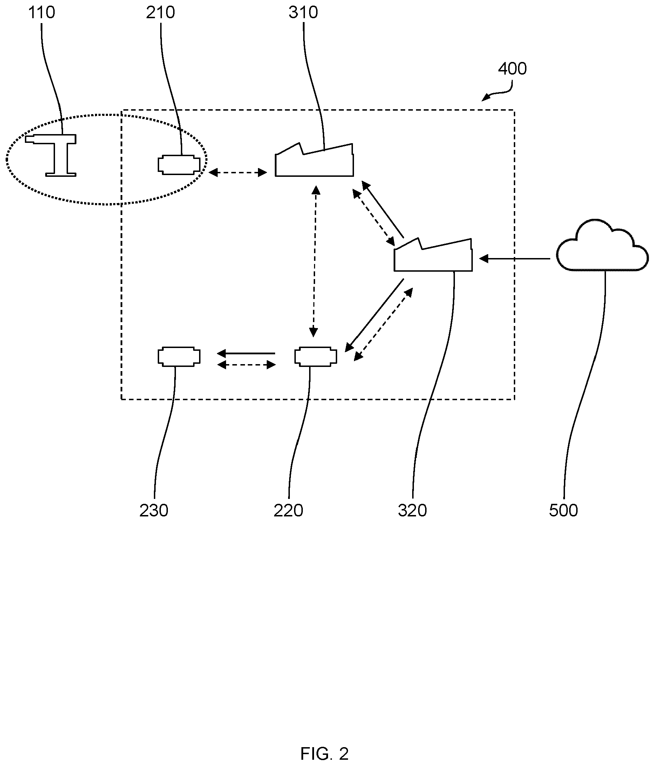

Fig. 2 shows a data transfer from a cloud 500 to chargers 310, 320 and batteries 210, 220, 230 connected by a wireless mesh network 400. In this use case it is shown how data can be transferred from the cloud 500 to batteries 220, 230 and chargers 310, 320. By the wireless mesh network 400 the second charger 320 can transfer the data from the cloud 500 to the first charger 310, which is not connected directly to the cloud 500. The second charger 320 can also transfer data by the wireless mesh network from the cloud 500 to the second battery 220 and to the third battery 230 which is farther away from the second charger 320 than the second battery 220. In a conventional system the data may not reach the third battery 230 which might be out of the range of the wireless transmission of the second charger 320.

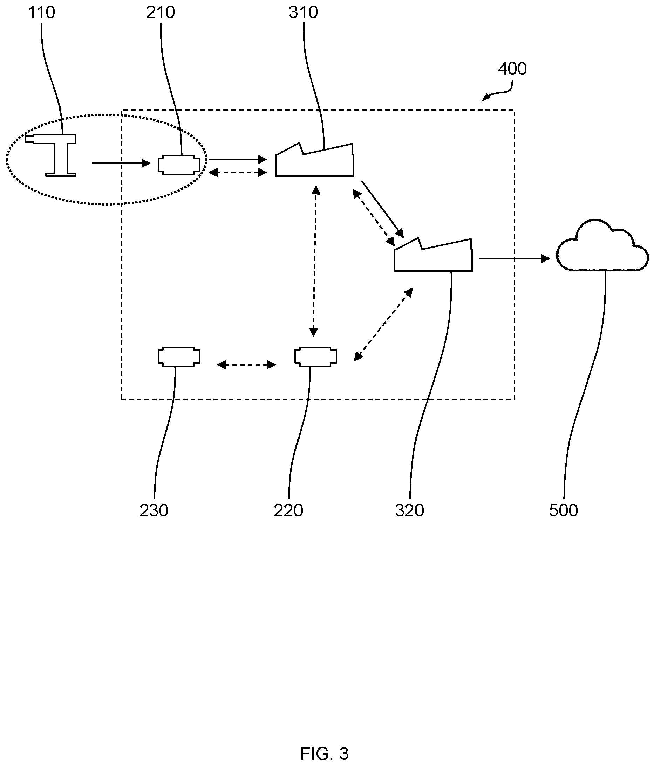

Fig. 3 shows an improved internet connectivity by a wireless mesh network 400. The use case shows that one charger 310, 320 in the wireless mesh network 400 is sufficient for connecting the whole wireless mesh network 400 to the cloud, e.g., the second charger 320 with cellular connectivity to a cloud 500. Alternatively, to the situation shown in Fig. 3, also a battery 210, 220, 230 and/or the first charger 310 might have cellular connectivity and be connected to the cloud 500.

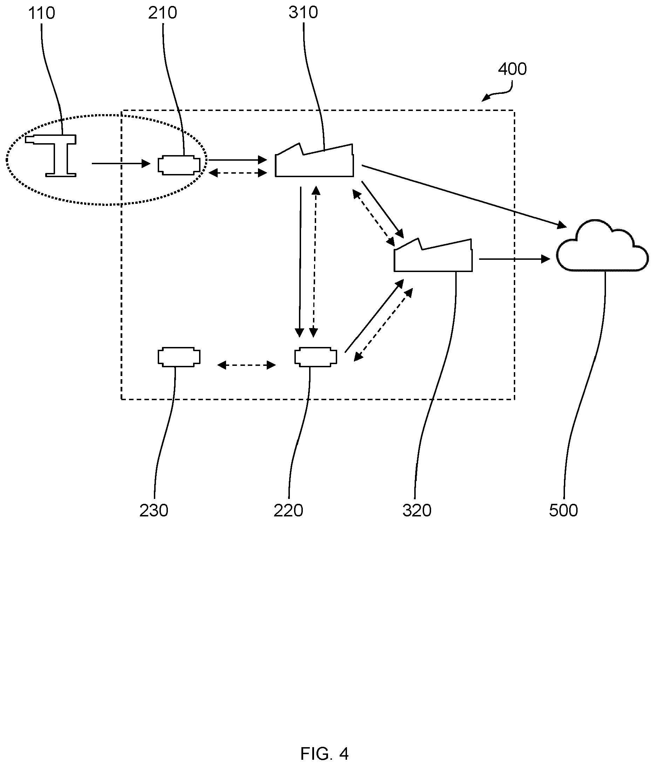

Fig. 4 shows a management of inventory on a jobsite with a wireless mesh network 400. The wireless mesh network 400 formed by batteries 210, 220, 230 and chargers 310, 320 can also be used to determine inventory of power tools 110, batteries 210, 220, 230, and chargers 310, 320 on a jobsite. Chargers 310, 320 may be assigned to specific locations on the jobsite, e.g., to a first floor and a second floor. Batteries 210, 220, 230 transfer regular announcements together with their identification number. If the batteries 210, 220, 230 are plugged to a power tool 110, e.g., the first battery 210 to the first cordless power tool 110, the batteries 210, 220, 230 can also transfer regular announcements on behalf of the power tools 110, they are plugged to. The announcements can be routed towards the closest charger 310, 320 which can forward the announcements to a cloud 500 and a device management platform. The closest charger 310, 320 may be determined, e.g., via a transmitted signal strength. The batteries 210, 220, 230 and the cordless power tools 110 can be deemed found at the logical location of the closest charger 310, 320. Multiple chargers 310, 320 may receive and forward the announcements to the cloud 500 and the device management platform. The batteries 210, 220, 230 and cordless power tools 110 may be deemed found at the logical location of the charger 310, 320 that is closest to them and may use, e.g., the number of hops to determine a distance. For the first battery 210 the first charger 310 is the closest charger in terms of hops. For the second battery 220 the first charger 310 and the second charger 320 have the same number of hops, however, the signal strength of a communication with the second charger 320 may be higher than in a communication with the first charger 310. Therefore, the second battery 220 may be assigned to the logical location of the second charger 320. The batteries 210, 220, 230 and/or the chargers 310, 320 may also use cellular connectivity and/or GPS technology to determine their physical location and transfer information on their physical location via the wireless mesh network 400.

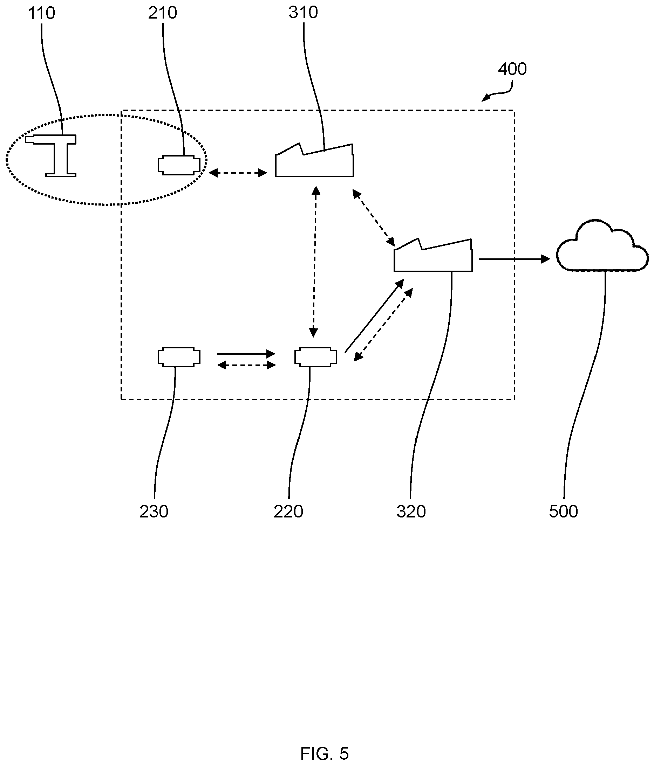

Fig. 5 shows the management of inventory on a jobsite from Fig. 4 in particular relation to an unused and unplugged battery 230. The third battery 230 is not plugged to a cordless power tool 110 and to a charger 310, 320. The third battery 230 can transfer data via the wireless mesh network 400 about its unplugged status. The wireless mesh network 400 can facilitate finding such unplugged batteries 230. In conventional systems such a battery 230 may be found only by chance or after a longer time, when the battery 230 is plugged to a cordless power tool 110 or to a charger 310, 320. By detecting batteries 230 which are not plugged to a cordless power tool 110 for a longer time, such batteries 230 may be removed from the jobsite and may be used at a different location where there is a need for more batteries 210, 220, 230.

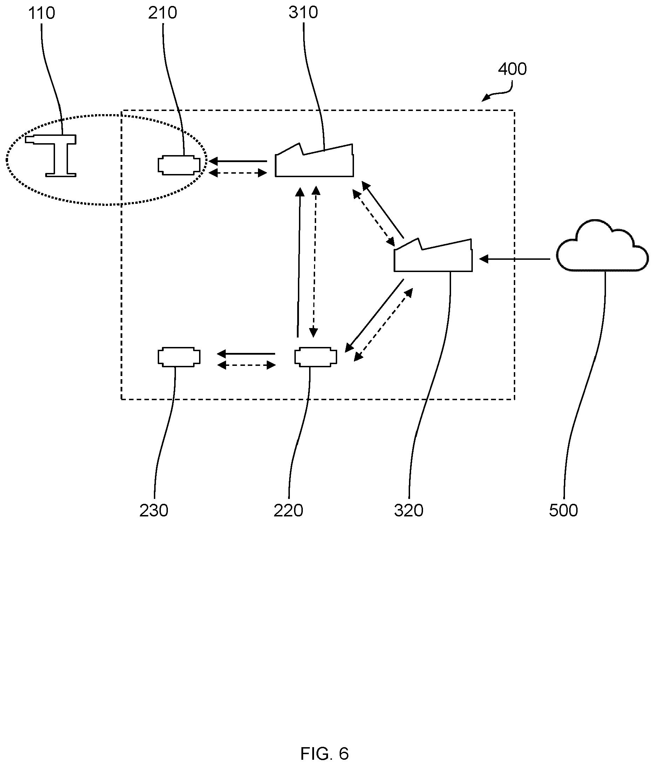

Fig. 6 shows a distribution of time and time zone via a wireless mesh network 400. Time and time zone information may be transferred from a cloud 500 to the wireless mesh network 400. The device-to-device communication via the wireless mesh network 400 allows for distribution of the time and time zone within the wireless mesh network 400 and different devices such as power tools 110, batteries, 210, 220, 230, and chargers 310, 320 may be synchronized to eliminate deviations.

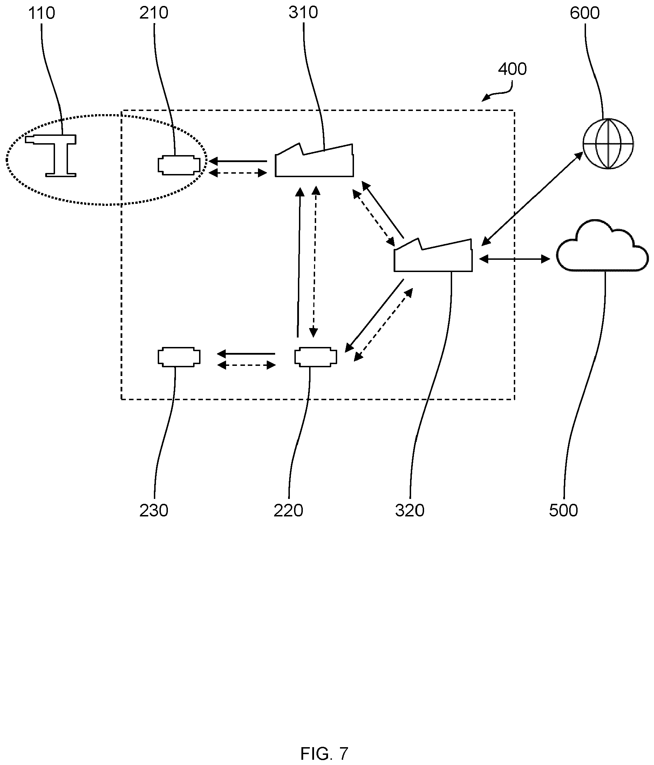

Fig. 7 shows a distribution of location information via a wireless mesh network 400. The most accurate location information may be shared with other devices, such as a batteries 210, 220, 230 or chargers 310, 320, in the wireless mesh network 400 to enhance the use cases, such as "last charged at" and "last seen at". This may also apply to situations where the device cannot determine its location. In this case the closest location can be requested by other devices in wireless mesh network 400. Each device may decide whether the received location is more accurate or newer than the own one. Location information may originate from the cloud 500, e.g., from a location service in cloud 500, or from GPS senders 600. The location information may be transferred into the wireless mesh network by the second charger 320, which has cellular and GPS capabilities. The location information may be distributed via the wireless mesh network 400 to all devices in the wireless mesh network 400. Batteries 210, 220, 230 may transfer the location information also to cordless power tools 110, when plugged to the cordless power tools 110.

It is visible from the examples depicted in Fig. 1 to Fig. 7 that batteries 210, 220, 230 are suited for use as mesh nodes. The batteries 210, 220, 230 have a constant power supply which can enable loT features, such as transferring data or sending announcements for long periods without charging. The power consumption for the loT features may be very low as compared to the power consumption of a cordless power tool 110 and may even be sufficient for a yearlong operation.

A wireless mesh network 400 can improve a wireless coverage on a construction site, because it is sufficient that only one device, such as a battery 210, 220, 230 or a charger 310, 320, of the wireless mesh network has an active internet connection to a cloud 500. The wireless mesh network 400 of batteries 210 ,220 230 and chargers 310, 320 can close connectivity gaps on construction sites, in buildings, or on yards by building one big local wireless mesh network 400.

Use cases may also be improved as data is getting faster, more reliable, and more frequently to the cloud due to redundant access points and multiple paths.

Fig. 8 shows an alternative schematic view of a system for data transfer between one or more batteries 210, 220, 230, one or more chargers 310, 320 for the batteries 210, 220, 230, and a cloud 500 emphasizing the way of connection. A second charger 320 is connected to the cloud 500 via cellular connectivity. The second battery 220, the third battery 230, the first charger 310 and the second charger 320 all participate in a wireless mesh network 400. The first cordless power tool 100 may be connected to the first battery 210 via a wired connection and the first battery 210 may be connected to the second charger 320 via a wired connection. The third battery 230 may be connected to the second cordless power tool 120 via a wired connection. Data from the first battery 210, including power tool data from the first cordless power tool may be transferred to the mesh network 400 via the second charger 320. Data from the third battery 230, including power tool data from the second cordless power tool 120, may be transferred over the wireless mesh network 400 directly from the third battery 230.

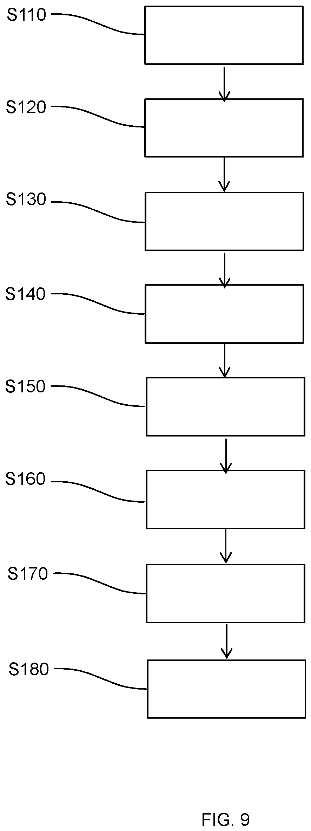

Fig. 9 shows in a flowchart a data transfer from a cordless power tool 110, 120 to a battery 210, 220, 230; via the battery 210, 220, 230 to a first charger 310; and via a second charger 320 as a gateway to a cloud 500.

In step S110, a first battery 210, a first charger 310, and a second charger 320 build a wireless mesh network 400 in which the first battery 210, the first charger 310, and the second charger 320 are nodes.

In step S120, the second charger 320 connects the wireless mesh network 400 as a first gateway to a cloud 500 for communication of data between the first battery 210, the first charger 310 and the second charger 320 and the cloud 500. The second charger 320 uses cellular connectivity for communication with the cloud 500.

In step S130, the first battery 210 is plugged to a first cordless power tool 110.

In step S140, the first battery 210 receives data from the first cordless power tool 110.

In step S150, the first battery 210 stores the data received from the first cordless power tool 110 in a data storage of the first battery 210.

In step S160, the first battery 210 transfers the data, received from the first cordless power tool 110, from the data storage to the first charger 310. The step 160 may be realized via the wireless mesh network 400 and/or via a wireless or wired connection established when the first battery 210 is plugged to the first charger 310.

In step 170, the first charger transfers the data received from the first battery 210 to the second charger 320 via the wireless mesh network 400.

In step S180, the second charger 320 transfers the data received from the first charger 310 to the cloud 500. The first charger 310 and/or the second charger 320 may forward the data received instantaneously or may store the data and transfer the data asynchronously at a later stage.

The opposite direction of data transfer from the cloud 500 to the power tool 110 follows, mutatis mutandis, a similar flow.

### REFERENCE NUMERALS

- 110: first cordless power tool
- 120: second cordless power tool
- 210: first battery
- 220: second battery
- 230: third battery
- 310: first charger
- 320: second charger
- 400: wireless mesh network
- 500: cloud
- 600: GPS senders

- S110: building a wireless mesh network
- S120: connecting a wireless mesh network to a cloud
- S130: plugging a battery to a cordless power tool
- S140: receiving data from a cordless power tool by a battery
- S150: storing data received from a power tool on a battery
- S160: transferring data received from a power tool from the data storage of a battery to a charger
- S170: communicating data from one charger to another charger
- S180: communicating data from a charger to the cloud

## Claims

1. A system for data transfer between one or more batteries (210, 220, 230), one or more chargers (310, 320) for the batteries (210, 220, 230), and a cloud (500) comprising:
- a first battery (210) of the one or more batteries (210, 220, 230) and a first charger (310) of the one or more chargers (310, 320), configured to be connected to each other in a wireless mesh network (400);
- at least a second battery (220) of the one or more batteries (210, 220, 230) and/or at least a second charger (310) of the one or more chargers (310, 320), configured to be connected to the wireless mesh network (400); and
- a first gateway configured to connect the wireless mesh network (400) to the cloud (500).

2. The system for data transfer according to claim 1, wherein the first and/or the second charger (310) is configured to act as the first and/or a second gateway and is configured to connect the wireless mesh network (400) to the cloud (500) via a wired or wireless connection.

3. The system for data transfer according to claim 1 or 2, wherein the first and/or the second battery (220) is further configured to communicate data, via a wireless or wired connection, with the first and/or the second charger (310), when the first and/or the second battery (220) is plugged to the first and/or the second charger (310) for being charged.

4. The system for data transfer according to claim 3, wherein the first and/or second battery (220) is configured to store in a battery data storage, data received from the first and/or the second charger (310), and/or wherein the first and/or second battery (220) is configured to transfer to the first and/or the second charger (310), data stored in the battery data storage.

5. The system for data transfer according to any of the claims 1 to 4, further comprising a cordless power tool (110, 120) configured to communicate data, via a wired or a wireless connection, with the first and/or the second battery (220) when the first and/or the second battery (220) is plugged to the cordless power tool (110, 120) for supplying power.

6. The system for data transfer according to claim 5, wherein the first and/or second battery (220) is configured to store in the battery data storage, data received from the cordless power tool (110, 120), and/or wherein the first and/or second battery (220) is configured to transfer to the power tool (110, 120), data stored in the battery data storage.

7. The system for data transfer according to any of the claims 1 to 6 used for transferring data via the cloud (500) to and/or from an asset management system for managing power tools (110, 120), batteries (210, 220, 230) and chargers (310, 320).

8. A wireless mesh network (400) comprising as nodes:
- a first battery (210);
- a first charger (310) for charging the first and/or a second battery (220);
- at least the second battery (220) and/or at least a second charger (310) for charging the first and/or the second battery (220).

9. The wireless mesh network (400) according to claim 8, wherein a first gateway is connecting the wireless mesh network (400) with a cloud (500), particularly, wherein the first and/or the second charger (310) is connecting the wireless mesh network (400) as the first and/or as a second gateway to the cloud (500).

10. The wireless mesh network (400) according to claim 8 or 9, wherein the first and/or second battery (220) is configured to communicate data, via a wired or a wireless connection, with one or more cordless power tools (110, 120), when the first and/or the second battery (220) is plugged to the one or more cordless power tools (110, 120) for supplying power.

11. The wireless mesh network (400) according to any of the claims 8 to 10, wherein the wireless mesh network (400) is using Bluetooth Mesh, Zigbee, Z-Wave, Matter, and/or Wirepas as communication standard.

12. A method to transfer data between one or more batteries (210, 220, 230), one or more chargers (310, 320) for the batteries (210, 220, 230), and a cloud (500), comprising the steps:
- building (S110) a wireless mesh network (400) with a first battery (210) of the one or more batteries (210, 220, 230), a first charger (310) of the one or more chargers (310, 320), and at least a second battery (220) of the one or more batteries (210, 220, 230) and/or at least a second charger (310) of the one or more chargers (310, 320) as nodes;
- connecting (S120) the wireless mesh network (400) via a first gateway to the cloud (500); and
- communicating (S180) data between the first battery (210), the second battery (220), the first charger (310) and/or the second charger (310) and the cloud (500) via the wireless mesh network (400) over the first gateway.

13. The method according to claim 12, wherein the first (310) and/or second charger (320) is operating as a gateway and is transferring data between the wireless mesh network (400) and the cloud (500) via a wired or a wireless connection.

14. The method according to claim 12 or 13, further comprising the steps:
- plugging (S130) the first battery (210) and/or second battery (220), to the cordless power tool (110, 120) for supplying power;
- receiving (140) data from a cordless power tool (110, 120) by the first battery (210) and/or second battery (220), when the first battery (210) and/or second battery (220) is plugged to the cordless power tool (110, 120);
- storing (S150) the data received from the power tool (110, 120) in a data storage of the first battery (210) and/or second battery (220); and
- transferring (S160) the data, received from the power tool (110, 120), from the data storage of the first battery (210) and/or second battery (220) to the first charger (310) and/or the second charger (320) via the wireless mesh network (400) and/or via a wireless or wired connection established when the first battery (210) and/or the second battery (220) is plugged to the first charger (310) and/or the second charger (320).

15. The method according to any of the claims 12 to 14, further comprising the steps:
- receiving data from the cloud (500) by the first battery (210) and/or second battery (220), via the wireless mesh network (400) and/or via the wireless or wired connection established when the first battery (210) and/or the second battery (220) is plugged on to the first charger (310) and/or the second charger (320);
- storing the data received from the cloud (500) in a data storage of the first battery (210) and/or second battery (220);
- plugging (S130) the first battery (210) and/or second battery (220), to the cordless power tool (110, 120) for supplying power; and
- transferring the data, received from the cloud (500), from the data storage of the first battery (210) and/or second battery (220) to the cordless power tool (110, 120) via a wireless or wired connection established when the first battery (210) and/or the second battery (220) is plugged to the cordless power tool (110, 120).
